Europäisches Patentamt

European Patent Office

Office européen des brevets

(19)

(11) **EP 0 517 385 B1**

(12) ## EUROPEAN PATENT SPECIFICATION

(45) Date of publication and mention
of the grant of the patent:
**02.01.1997 Bulletin 1997/01**

(51) Int Cl.6: **H04N 5/44**

(21) Application number: **92304384.8**

(22) Date of filing: **14.05.1992**

(54) **A method of doubling the number of lines of a video signal received in the form of sequential samples**

Verfahren zur Verdoppelung der Zeilenanzahl eines in der Weise von sequentiellen Proben empfangenen Videosignals

Méthode de doublement de nombre de lignes d'un signal vidéo reçu sous la forme d'échantillons successifs

(84) Designated Contracting States:
**DE ES FR GB IT NL SE**

(30) Priority: **05.06.1991 FI 912698**

(43) Date of publication of application:
**09.12.1992 Bulletin 1992/50**

(73) Proprietor: **NOKIA KULUTUSELEKTRONIIKKA OY**
**20321 Turku (FI)**

(72) Inventors:
• **Pohjala, Pasi**
**SF-33580 Tampere (FI)**

• **Karlsson, Matti**
**SF-37830 Viiala (FI)**

(74) Representative: **Singleton, Jeffrey**
**Eric Potter Clarkson**
**St. Mary's Court**
**St. Mary's Gate**
**Nottingham NG1 1LE (GB)**

(56) References cited:
**EP-A- 0 372 774**   **EP-A- 0 391 094**
**GB-A- 2 114 396**   **US-A- 4 620 225**

**Description**

The invention relates to a method in which a television picture by digital signal processing means is converted into a picture having the double number of lines by using a motion detector to detect motion in a part area of the picture.

A television picture of the present PAL system is composed of 625 lines being scanned in a known way as interleaved lines. 576 lines of these are active lines visible on the screen. The fact that the picture is composed of lines is not in itself inconvenient when the picture has a moderate size, smaller than 30", whereby also the viewing distance increases with a growing picture and the eye does not perceive the line structure of the picture as too disturbing. At present manufacturers offer television sets provided with picture tubes having large sized pictures, over 33", and in so large pictures the lines will be clearly visible and disturbing. The problem is even greater when a projection display is used to produce very large pictures, whereby e.g. in back projection television the picture is projected from behind the screen via a mirror onto the screen. In order to obviate the problem caused by the large screen and the low number of lines compared to the size, a natural solution is to increase the number of lines in any suitable way. Because it is not possible to act on the transmission system, IDTV (Improved Definition Television) facilities are used, in which the received picture is edited with digital signal processing means in the receiver itself before scanning the screen. With the IDTV facility and a suitable calculating algorithm it is possible to increase the total number of lines from 625 to 1250, of which there are 1152 active lines displayed on the screen. When this number of lines is scanned on a screen, even on a large screen, the individual lines have a height which is only half of that in a picture of the corresponding size and with 625 lines. Therefore a viewer will not anymore perceive the line structure as disturbing.

In the high definition television HDTV, which will be introduced in the future, it will be necessary to use recorders and other program sources already widely available, in which the picture is stored with the 625 line system. Because the HDTV line number is 1250, it will be necessary in some way to convert the number of lines into the double before transmission.

The doubling of the number of lines is called LRU (Line Rate Upconversion). Conversions of this kind are interpolation algorithms which add new lines between the original lines, and so the greatest problem in line rate upconversion is to find a suitable interpolation algorithm. Said lines are formed by pixels obtained by digitizing the received video signal. Receivers have been designed where the number of lines is converted simply so that the number of lines is doubled, whereby a new inserted line is exactly the same as the original line. The algorithms to be used are simple and they may be easily realized using either a line or a field memory. The disadvantages of these methods cause artefacts particularly seen in diagonal lines, and the results are relatively poor both in moving and stationary parts of the picture. It is also possible to use line averaging, whereby the line to be interpolated is the average of two sequential lines. This is somewhat better than the doubling of lines, but the resolution is decreased in the stationary parts of the picture. In the IDTV methods it was also tried to develop a motion detector, so that stationary and moving picture areas could be processed with different algorithms suitable for them. The function of a motion detector is to decide whether the picture is moving or not. In practice this task is very difficult to realize, and due to interlacing it is not possible to reliably detect certain types of motion. The detection is further complicated by errors of the transmission path, e.g. noise generated in the transmission.

The Finnish patent FI-81232, Salora Oy, corresponding to European Patent Application EP-A-372774, presents an IDTV method where errors in the television picture caused by the interlaced transmission standard and the low field frequency are reduced by digital signal processing. According to the method the normal video signal is converted with a weighted median filter operating in a 3*3 filtering mask e.g. into progressively scanned video signal with a field frequency of 100 Hz. The window of the filter described in this patent has on the middle row information of the old previous field and on the other two rows information of the currently received field. At the input there is also information of the contents on just received lines above and below the picture element. Based on this information the filter interpolates a new picture element. In stationary areas of the picture the filter tends to select an old point and on the other hand in areas where the environment differs from the value of the old picture element, the picture element is selected to suit the environment. The filter implicitly tends to keep straight lines in the picture. It is possible to further improve the function of the filter with the aid of a simple motion detector. One motion detector suitable for use with this invention functions so that it computes two Boolean parameters to describe the motion state which both must have the value "true" in order to make "moving" decision. The detector calculates the sum of the absolute differences between the pixel and its neighboring pixels in a current frame and previous frame. Then the difference between these sums is calculated, and if the absolute value of the difference is greater than a selected threshold value K1, then the first parameter is "true". Then the absolute value of the difference between the examined pixel of the current frame and the corresponding pixel of the previous frame is calculated, and if it is greater than a selected threshold value K2, the second parameter is "true". If both parameters get the value "true", then the pixel is construed as being "moving", and if the value is "false", then the pixel is construed as being "stationary". A person skilled in the art will also know other ways to design a movement detector.

The aim of this invention is to provide a conversion of the number of lines into the double number without the disadvantages of the above mentioned known means. This is provided by forming in a certain way the odd and even fields of the converted picture and by thereby utilizing the features of the filter algorithm based on the patent FI-81232. The method of the invention is characterized by what is stated in the characterizing clause of claim 1, the preamble of said claim 1 being already disclosed in prior art document US-A-4620225.

An algorithm like the median filter of the patent FI-81232 but slightly modified is used to calculate a pixel of the new line to be interpolated between two original lines formed by pixels. Three adjacent pixels from the two original lines are taken into the calculation, so that the pixels in pairs are on the same vertical line and the interpolated pixel of the new line to be formed is in the vertical direction located between the "original" middle pixels. Since the method uses a motion-adaptive median filter with several input pixels on the horizontal level, a considerable improvement of the interpolation result is obtained concerning diagonal boundary surfaces, compared to the use of a filter with inputs consisting mainly of pixels of the vertical direction. The pixels are generated in different way for the odd and even lines in the new converted picture, depending on the movement in the picture area. In stationary areas of the picture the new lines are formed as an operation between the fields, so that the odd field (625 lines) of the odd lines in the new converted picture are generated by combining original even and odd lines. The even field of the even lines in the new picture to be scanned between these odd lines are generated by interpolation in a nine point median filter, the input pixels of which belong to the subsequent lines in the odd field of the original picture and thus also of the new picture. The lines thus come from sequential fields of the original picture. The line number conversion in picture areas containing motion is made only within the original field, whereby the lines in both fields of the converted picture contain both original lines and new lines of interpolated pixels, the pixels being generated in a nine point median filter. In the invention it is preferred to use such a motion detector, in which the motion information is temporally expanded so that also the moving pixels in the previous field are interpreted as moving. This means that if the detector detected motion in the temporally previous field, but does not detect motion in the new field, even then the new field is considered to contain movement.

The invention is described in more detail with the aid of the enclosed figures, in which

Figure 1 shows the sample pattern of the filter used in the invention,

Figure 2 shows the doubling of the lines in stationary picture areas, and

Figure 3 shows the doubling of the lines in picture areas containing motion.

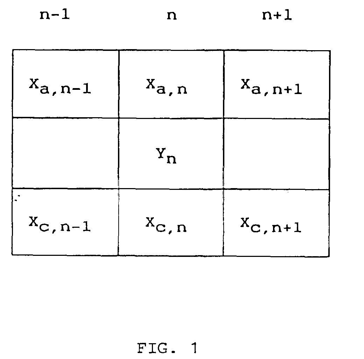

In the following text it must be noted that by lines are meant the lines in a digitized video signal, i.e. the lines are formed by pixels. The median filter used in the invention is based on the median filter according to patent FI-81232 operating in a 3*3 window, and its input pixel pattern is shown in figure 1. There three consecutive pixels $x_{a,n-1}$, $x_{a,n}$ and $x_{a,n+1}$ are taken from an upper line a and in the same manner three pixels $x_{c,n-1}$, $x_{c,n}$ and $x_{c,n+1}$ are taken from a lower line c. The pixels are located in pairs in vertical columns n-1, n, n+1. The middle line b represents the new line to be interpolated and there $y_n$ represents the new pixel to be interpolated with the aid of the x-pixels. This selection of the input pixels from the horizontal level provides a good reproduction of diagonal lines in the presented picture, but a horizontal aliasing is a disadvantage at high horizontal frequencies. Aliasing is generated in digital filters mainly when the sampling frequency is too low compared with the highest signal frequency. For example, when lines are interpolated digital filters of this type generate aliasing already at a 3 MHz signal frequency, when the sampling frequency is 13.5 MHz. When the middle input pixels $x_{a,n}$ and $x_{c,n}$ are weighted with the weighting factor 2, the horizontal aliasing can be prevented. The weighting increases the number of input pixels to eight. The ninth sample is the average $(x_{a,n} + x_{c,n})$ /2 of the middle pixels of lines a and c. The number of input pixels is thus the same as in the filter defined in the FI-patent. According to the notation above, the median filter operations may be described by the following formula:

$$y_n = \mathrm{MED}(\, x_{a,n-1},\, 2{*}x_{a,n},\, x_{a,n+1},$$

$$x_{c,n-1},\, 2{*}x_{c,n},\, x_{c,n+1},\, (x_{a,n} + x_{c,n})/2) \tag{1}$$

$y_n$ is the value of the pixel to be interpolated, and it is thus one of the nine input values of the median filter.

The arrangement of the input pixels in the described way increases the probability that the value $y_n$ of the interpolated pixel is the same as the value of the middle sample of line a or c. If there are high horizontal frequencies in the picture area, the interpolation function of the filter operates like a vertical median filter in weighing these middle samples. In this way the horizontal aliasing is almost totally eliminated. The filter thus calculates the $y_n$ of the interpolated pixel for line b in much the same way as described in the mentioned patent.

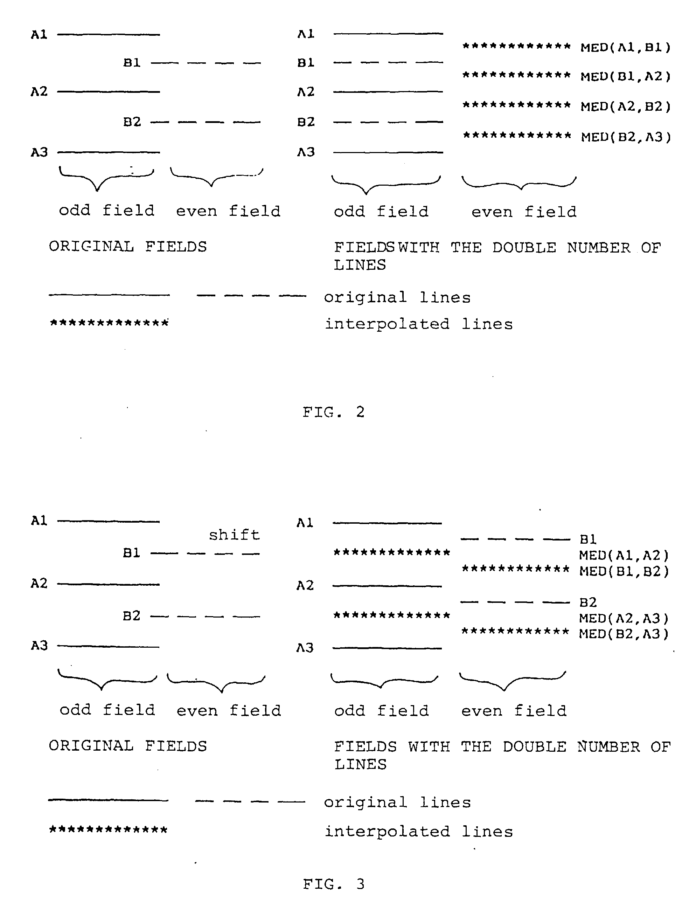

In the following it is explained, referring to figures 2 and 3, where the lines a and c originate.

Let us assume that the transmission system is PAL with 625 lines, which are scanned in a known way so that e. g. the lines A1, A2, ... of the odd field are scanned, and that between these are scanned the lines B1, B2, ... of the even field. Figure 2 shows how the lines a and c are selected when the motion detector has detected the picture area to be stationary. The left side of the figure represents normal scanning of said PAL picture. The odd field of the new picture converted into 1250 lines contains 625 lines and they are formed by all lines in the original picture, scanned sequentially in the order A1, B2, A2, B2, etc. Since a stationary picture or area of the picture is interpolated, there is nothing to prevent using lines belonging to different original fields in the way shown in the figure. The 625 lines of the even field of the new picture with 1250 lines are formed by interpolation with the median filter performing the above mentioned algorithm on the sample pattern according to figure 1. There is now always one line A1, A2, ... of the new odd field corresponding to line a and the next line B1, B2, ... of the new odd field corresponding to line c. Thus the first line of the new even field is formed according to figure 2 by interpolating its pixels from the pixels of lines A1 and B1 of the new odd field, the lines B1 and A2 are used to form the next even line, the third line of the even field is formed from the lines A2 and B2 of the odd field. In this way all lines of the new even field are formed. The final picture or part of the picture with 1250 lines is formed by scanning first the lines of the new odd field on the screen and therebetween the lines of the even field. On the right hand side of figure 2 it is seen that every second line of the final picture with 1250 lines is an original line and every second line is formed by interpolation.

Figure 3 shows the selection of lines a and c when the movement detector has detected that the picture or a picture part contains motion. The conversion of the picture area containing motion is made inside the current picture field (an odd field of lines A or an even field of lines B), and not between the fields, as was the case above in for stationary pictures. In this way it is possible to avoid motion blur artefact.

The odd picture field with 625 lines for the new picture with 1250 lines is formed by the lines A1, A2, ... of the original odd field, between which lines consisting of new interpolated pixels are formed with the above described median filter. For instance the line A1 now corresponds to line a of figure 1, and the line A2 corresponds to line c, and the interpolated line b is thus obtained with a median operation MED(A1, A2) concerning the pixels of these lines. All lines formed by the interpolated pixels are formed in this way for the odd field in the new picture with 1250 lines. The odd field with 625 lines is thus formed by the odd lines of the original odd lines and by new lines interpolated between them and consisting of pixels formed by the median operation $MED(A_n, A_{n+1})$ concerning the lines above and below, according to figure 1. The odd field is scanned with uniform intervals over the whole picture area. The even field with 625 odd lines is formed by the original odd lines B1, B2, ... and new lines interpolated between them. The field is generated in the same way as the new odd field described above. Thus the line a of figure 1 now corresponds e.g. to line B1 and the line c corresponds to line B2, and the line b interpolated between them is obtained with the median operation MED (B1, B2). In a corresponding way new lines are generated from these lines by interpolation between all original lines $B_n$, $B_{n+1}$, whereby a new even field with 625 lines is obtained which is scanned at uniform intervals over the whole picture area and interlaced with the lines of the odd field with 625 lines. The final picture with the 1250 lines then always has two lines from the original picture and the next two lines after these are generated by interpolation.

In the case of processing a moving picture area the required hardware is simpler than those of a stationary area processing, due to the interpolation within the field. Only one line memory is required. The lines of the even field of the original picture, the lines B in the left half of the figure 3, must be shifted half a line width upwards in the original raster, as is indicated in figure 3 with the arrows "shift". When processing a moving picture area the spatial resolution of the result is not as good as that obtained in the processing of a stationary picture, but this is not a very serious disadvantage. The attenuation of high vertical frequencies does not produce any substantial serration or irritating flicker effects.

When the method of the invention is used, a motion in the picture area must be detected by some known means. To this end different motion detectors have been developed, which may be used in this method. A correct movement detection decision is of critical importance when the quality of the picture with the double number of lines is examined. Particularly, if a part area of the picture is considered stationary, even if it contains motion, and accordingly if inter field interpolation is used instead of intra field interpolation, the final picture will suffer from severe motion blur effect. If a part area of the picture is interpreted as containing motion, even if it is stationary, the inconvenience is not that severe. Then intra field interpolation is used instead of inter field interpolation, but this will produce mainly attenuation of high vertical frequencies, which is not a disadvantage, particularly when the incorrectly interpreted picture part is a small part of the whole picture.

With the aid of the method according to the invention it is possible to double the number of lines retaining a good quality of the picture. Diagonal lines and diagonal boundaries between areas will remain continuous, and no horizontal aliasing will occur. As an example the doubling of the 625 lines in the PAL system was explained, but there could be any number original lines, e.g. 819 lines, 405 lines or the 525 lines of the NTCS system. Scanning of the screen can be interlaced, or equally well it is possible to use progressive scanning. The field frequency may be 50 Hz or higher, e.g. 80 Hz or 100 Hz, in order to prevent flicker.

The method of the invention can be applied to standard system television sets with large picture tubes, and also to the future high definition television sets. It is tried to have the European HDTV system with 1250 lines at least to some extent compatible with the existing transmission system. A great part of the material used for HDTV transmissions is made with techniques according to present systems, and with high definition television it must also be possible to view a picture transmitted by the present PAL system. Then the present picture with 625 lines can be converted with the method according to the invention into a picture with 1250 lines, the number of lines used by HDTV. The method may be used as an alternative in HDTV when a picture is received containing no movement information. Normally the movement information of the HDTV picture is transmitted as movement vectors in the DATV signal (Digital Assistance Television) during a field change.

## Claims

1. A method of doubling the number of lines of a video signal received in the form of sequential samples, whereby the original digitised picture area consists of fields formed by odd lines (A1,A2,A3, ...) and even lines B1,B2,B3 ...) and whereby a motion detector is used to detect motion in the picture area, wherein:-

   - in a stationary picture area the odd field (A1,B1,A2,B2, ...) is formed of alternating original odd and even lines starting with the first odd line (A1), and the even field is formed of lines, each being obtained by interpolation from two lines, of which one is an original odd line and the other line is an original even line, starting in sequence from the first odd line (A1) and the first even line (B1);
   - in a moving picture area the odd field is formed of original odd lines (A1,A2,A3, ...), and between each two original lines there is placed a new line obtained by interpolation from these two lines, and the even field is formed by the original even lines (B1,B2,B3, ...), and between each two adjacent original lines there is placed a new line obtained by interpolation from these two lines, characterized in that a weighted median filter is used in the interpolation of a pixel, the filter being expressed by the formula:

$$y_n = MED(x_{a,n-1}, 2^*x_{a,n}, x_{a,n+1},$$

$$x_{c,n-1}, 2^*x_{c,n}, x_{c,n+1}, (x_{a,n} + x_{c,n})/2)$$

   where n is a number indicating the horizontal position of the pixel, $y_n$ is the pixel to be interpolated, $x_{a,n-1}$, $x_{a,n}$ and $x_{a,n+1}$ are pixels of the first line (a) used in the interpolation, $x_{c,n-1}$, $x_{c,n}$ and $x_{c,n+1}$ are pixels of the second line (c) used in the interpolation.

2. A method according to claim 1, characterized in that the received video, which comprises a picture with 625 lines, is converted into a video signal comprising a picture with 1250 lines.

## Patentansprüche

1. Verfahren zum Verdoppeln der Anzahl der Zeilen eines in der Form aufeinanderfolgender Abtastwerte empfangenen Videosignals, wobei der ursprüngliche Bildbereich aus durch ungeradzahlige Zeilen (A1, A2, A3, ...) und geradzahligen Zeilen (B1, B2, B3, ...) gebildeten Halbbildern besteht und wobei zum Erkennen von Bewegung im Bildbereich ein Bewegungsdetektor verwendet wird, wobei:

   - in einem stationären Bildbereich das ungeradzahlige Halbbild (A1, B1, A2, B2, ...) aus abwechselnden ursprünglichen ungeradzahligen und geradzahligen Zeilen beginnend mit der ersten ungeradzahligen Zeile (A1) erzeugt wird und das geradzahlige Halbbild aus solchen Zeilen erzeugt wird, von denen jede durch Interpolation aus zwei Zeilen erhalten wird, wobei die eine eine ursprüngliche ungeradzahlige Zeile und die andere eine ursprüngliche geradzahlige Zeile ist, wobei in der Reihenfolge mit der ersten ungeradzahligen Zeile (A1) und der ersten geradzahligen Zeile (B1) begonnen wird;
   - in einem Bildbereich mit Bewegung das ungeradzahlige Halbbild aus ursprünglichen ungeradzahligen Zeilen (A1, A2, A3, ...) erzeugt wird und zwischen jeweils zwei ursprünglichen Zeilen eine neue Zeile angeordnet wird, die durch Interpolation aus diesen zwei Zeilen erhalten wird, und das geradzahlige Halbbild durch die ursprünglichen geradzahligen Zeilen (B1, B2, B3, ...) erzeugt wird und zwischen jeweils zwei benachbarten ursprünglichen Zeilen eine neue Zeile angeordnet wird, die durch Interpolation aus diesen zwei Zeilen erhalten wird;

**dadurch gekennzeichnet, dass** bei der Interpolation eines Pixels ein gewichtetes Medianfilter verwendet wird, das durch die folgende Gleichung ausgedrückt ist:

$$y_n = MED(x_{a,n-1}, 2 \cdot x_{a,n}, x_{a,n+1}, x_{c,n-1},$$

$$2 \cdot x_{c,n}, x_{c,n+1}, (x_{a,n} + x_{c,n})/2),$$

wobei

- n eine Zahl ist, die die Horizontalposition des Pixels angibt;
- $y_n$ das zu interpolierende Pixel ist;
- $x_{a,n-1}$, $x_{a,n}$ und $x_{a,n+1}$ Pixel der bei der Interpolation verwendeten ersten Zeile (a) sind und
- $x_{c,n-1}$, $x_{c,n}$ und $x_{c,n+1}$ Pixel der bei der Interpolation verwendeten zweiten Zeile (c) sind.

2. Verfahren nach Anspruch 1, **dadurch gekennzeichnet, dass** das empfangene Videosignal, das ein Bild mit 625 Zeilen enthält, in ein Videosignal umgesetzt wird, das ein Bild mit 1250 Zeilen enthält.

## Revendications

1. Procédé de doublement du nombre de lignes d'un signal vidéo reçu sous la forme d'échantillons successifs, au moyen duquel la zone d'image d'origine est constituée de trames formées par des lignes impaires (A1, A2, A3...) et des lignes paires (B1, B2, B3...) et au moyen duquel un détecteur de mouvement est utilisé pour détecter le mouvement dans la zone d'image, dans lequel :

dans une zone d'image fixe, la trame impaire (A1, B1, A2, B2, ...) est formée de lignes impaires et paires d'origine alternées commençant avec la première ligne impaire (A1) et la trame paire est formée de lignes, chacune étant obtenue par interpolation à partir de deux lignes, dont une est une ligne impaire d'origine et l'autre ligne est une ligne paire d'origine, commençant en séquence à partir de la première ligne impaire (A1) et de la première ligne paire (B1) ;
dans une zone d'image animée, la trame impaire est formée des lignes impaires d'origine (A1, A2, A3...) et entre chaque deux lignes d'origine est placée une nouvelle ligne obtenue par l'interpolation à partir de ces deux lignes et la trame paire est formée par les lignes paires d'origine (B1, B2, B3,...) et entre chaque deux lignes d'origine adjacentes est placée une nouvelle ligne obtenue par l'interpolation à partir de ces deux lignes,

caractérisé en ce qu'un filtre médian pondéré est utilisé dans l'interpolation d'un pixel, le filtre étant exprimé par la formule :

$$y_n = MED( x_{a,n-1}, 2^*x_{a,n}, x_{a,n+1},$$

$$x_{c,n-1}, 2^*x_{c,n}, x_{c,n+1}, (x_{a,n} + x_{c,n})/2) \tag{1}$$

où n est un nombre indiquant la position horizontale du pixel, $y_n$ est le pixel qui doit être interpolé,
$x_{a,n-1}$, $x_{a,n}$ et $x_{a,n+1}$ sont les pixels de la première ligne (a) utilisée dans l'interpolation,
$x_{c,n-1}$, $x_{c,n}$ et $x_{c,n+1}$ sont les pixels de la seconde ligne (c) utilisée dans l'interpolation.

2. Procédé selon la revendication 1, caractérisé en ce que la vidéo reçue, laquelle comprend une image comportant 625 lignes, est convertie en un signal vidéo comprenant une image comportant 1250 lignes.

n-1         n         n+1

| $x_{a,n-1}$ | $x_{a,n}$ | $x_{a,n+1}$ |
|---|---|---|
| | $Y_n$ | |
| $x_{c,n-1}$ | $x_{c,n}$ | $x_{c,n+1}$ |

FIG. 1

A1 ————————

   B1 — — — —

A2 ————————

   B2 — — — —

A3 ————————

   odd field even field

ORIGINAL FIELDS

A1 ————————  *********** MED(A1,B1)

B1 — — — —  *********** MED(B1,A2)

A2 ————————  *********** MED(A2,B2)

B2 — — — —  *********** MED(B2,A3)

A3 ————————

  odd field  even field

FIELDS WITH THE DOUBLE NUMBER OF LINES

———————— — — — — original lines

***********  interpolated lines

FIG. 2

A1 ————————

     shift

   B1 — — — —

A2 ————————

   B2 — — — —

A3 ————————

  odd field even field

ORIGINAL FIELDS

A1 ————————

    — — — — B1

*********** MED(A1,A2)

*********** MED(B1,B2)

A2 ————————

    — — — — B2

*********** MED(A2,A3)

*********** MED(B2,A3)

A3 ————————

  odd field  even field

FIELDS WITH THE DOUBLE NUMBER OF LINES

———————— — — — — original lines

***********  interpolated lines

FIG. 3